(19) **Europäisches Patentamt / European Patent Office / Office européen des brevets**

(11) **EP 2 464 174 A1**

(12) **EUROPEAN PATENT APPLICATION**
published in accordance with Art. 153(4) EPC

(43) Date of publication:
**13.06.2012 Bulletin 2012/24**

(21) Application number: **10853534.5**

(22) Date of filing: **26.11.2010**

(51) Int Cl.:
***H04W 52/00*** (2009.01)

(86) International application number:
**PCT/CN2010/079193**

(87) International publication number:
**WO 2011/160395 (29.12.2011 Gazette 2011/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2010 CN 201010205961**

(71) Applicant: **ZTE Corporation
Shenzhen, Guangdong 518057 (CN)**

(72) Inventor: **LI, Jinghai
Shenzhen City
Guangdong Province 518057 (CN)**

(74) Representative: **Novagraaf Technologies
122, rue Edouard Vaillant
92593 Levallois-Perret Cedex (FR)**

(54) **METHOD, DEVICE AND SYSTEM FOR MEASURING NOISE FLOOR OF BASE STATION ANTENNA PORT**

(57) The present invention discloses a method, an apparatus and a system for measuring background noise of a base station antenna interface, used to implement real-time measurement of the signal strength of background noise of the base station antenna interface. The method for measuring the background noise of the base station antenna interface includes: when confirming that a number of configured carriers is smaller than a maximum number of configurable carriers according to carrier frequency configuration information of a base station transceiver, determining idle carrier frequencies that are configurable for use but are not configured for use; selecting an idle carrier frequency to be measured used for measuring the background noise of the base station antenna interface from the determined various idle carrier frequencies, and synchronizing a configuration parameter of the idle carrier frequency to be measured to a base station transceiver; taking a received signal strength indication (RSSI) value of the idle carrier frequency to be measured that is measured and reported by the base station transceiver according to the configuration parameter as signal strength of the background noise of the base station antenna interface.

When it is confirmed that the number of the configured carriers is smaller than the maximum number of configurable carriers according to the carrier frequency configuration information of a base station transceiver, determining the idle carrier frequency that is configurable for use but has not configured for use — S201

Selecting the idle carrier frequency to be measured that is used for measuring the background noise of the base station antenna interface from the determined various idle carrier frequencies, and the synchronizing the configuration parameter of the idle carrier frequency to be measured to the base station transceiver — S202

Taking the RSSI value of the idle carrier frequency to be measured that is measured and reported by the base station transceiver according to the configuration parameter as the signal strength of the background noise of the base station antenna interface — S203

FIG. 2

**EP 2 464 174 A1**

**Description**

Technical Field

The present invention relates to the mobile communication field, and particularly, to a method, an apparatus and a system for measuring base station antenna port background noise.

Background of the Related Art

A good and ordered radio environment is a basis of normal operation of a base station in a mobile communication system. A method for judging the quality of the radio environment is to measure and analyze the background noise of the base station antenna interface. The base station antenna interface refers to the space interface of the base station antenna, and when there is no signal or interference existing at the antenna interface, the background noise is spatial thermal noise.

In the related art, the common method for measuring the background noise of the base station antenna interface comprises:

according to method 1, a network maintainer performs measurement in field at the base station antenna interface using instruments;

according to method 2, when the configured carrier of the base station system does not have a terminal user, the signal strength of the background noise of the base station antenna interface is measured by measuring the Received Signal Strength Indication (RSSI) value of this carrier.

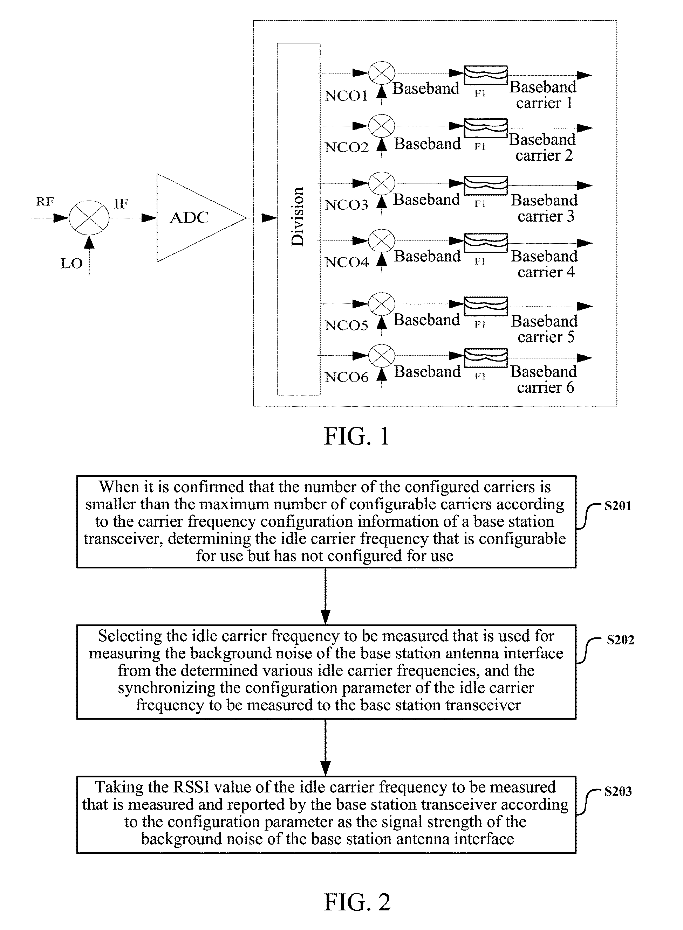

In the existing method 2, the measurement principle of the base station transceiver is shown in FIG. 1, the received multi-carrier signal of the base station antenna interface is amplified and adjusted by the reverse receiver link, and is transmitted to the analog-to-digital converter (ADC), and is transformed to a corresponding broadband digital signal by ADC, and then the broadband digital signal is divided and output to each baseband carrier processing link; wherein each baseband carrier processing link has a "digital mixer and numerical controlled oscillator (NCO) circuit", which converts the frequency of the broadband digital signal to the required baseband digital signal. The baseband digital signal then passes a baseband carrier filter, and a carrier baseband digital signal is output, for example, baseband carrier 1, baseband carrier 2, baseband carrier 3, baseband carrier 4, baseband carrier 5, baseband carrier 6 in FIG. 1, and a plurality of carrier baseband digital signals are respectively output to the RSSI measuring module, and the RSSI value of each carrier baseband digital signal is calculated respectively and is reported to an operation and maintenance center (OMC). If there is no terminal user, i.e., there is no a user signal, in a carrier of the base station antenna interface, the carrier baseband digital signal corresponding to this carrier is a spatial background signal, and the RSSI value of this carrier is the signal strength of the background noise of the base station antenna interface.

In the related art, the first method for measuring the background noise of the base station antenna interface needs the network maintainer to perform measurement in field and needs to spend a lot of man forces and resources; the second method for measuring the background noise of the base station antenna interface should be performed when the configured carrier in the base station system does not have a terminal user, rather than performing measurement in real-time. In practical application, however, the real-time measurement of the signal strength of the background noise of the base station antenna interface is important for real-time measuring, and maintaining the radio environment of the base station and the high-performance normal operation of the base station system.

Therefore, how to measure the signal strength of the background noise of the base station antenna interface in real-time becomes an urgent technical problem in the related art.

Summary of the Invention

Embodiments of the present invention provide a method, an apparatus and a system for measuring background noise of the base station antenna interface, which are used to implement the real-time measurement of the signal strength of the background noise of the base station antenna interface, so as to offer guarantee for the real-time measuring, maintaining the radio environment of the base station and the high-performance normal operation of the base station system.

Embodiments of the present invention provide a method for measuring background noise of a base station antenna interface, comprising:

when confirming that a number of configured carriers is smaller than a maximum number of configurable carriers according to carrier frequency configuration information of a base station transceiver, determining idle carrier frequencies that are configurable for use but are not configured for use;

selecting an idle carrier frequency to be measured used for measuring the background noise of the base station antenna interface from various determined idle carrier frequencies, and synchronizing a configuration parameter of the idle carrier frequency to be measured to the base station transceiver; and

taking a received signal strength indication (RSSI) value of the idle carrier frequency to be measured that is measured and reported by the base station transceiver according to the configuration parameter as signal strength of the background noise of the base station antenna interface.

The embodiment of the present invention further provides an apparatus for measuring background noise of a base station antenna interface, comprising:

a judging unit, which is configured to: trigger a determining unit when confirming that a number of configured carriers is greater than a maximum number of the configurable carriers according to carrier frequency configuration information of a base station transceiver;

the determining unit, which is configured to: determining idle carrier frequencies that are configurable for use but are not configured for use;

a selecting unit, which is configured to: select an idle carrier frequency to be measured used for measuring the background noise of the base station antenna interface from various idle carrier frequencies determined by the determining unit; and

a first measuring unit, which is configured to: synchronize a configuration parameter of the idle carrier frequency to be measured to the base station transceiver, and take a received signal strength indication (RSSI) value of the idle carrier frequency to be measured that is measured and reported by the base station transceiver according to the configuration parameter as signal strength of the background noise of the base station antenna interface.

The embodiment of the present invention further provides a system for measuring the background noise of a base station antenna interface, comprising:

an operation and maintenance center (OMC), which is configured to: determine idle carrier frequencies that are configurable for use but are not configured for use when confirming that a number of configured carriers is smaller than a maximum number of configurable carriers according to carrier frequency configuration information of a base station transceiver; select an idle carrier frequency to be measured used for measuring the background noise of the base station antenna interface from the various determined idle carrier frequencies, and synchronize a configuration parameter of the idle carrier frequency to be measured to the base station transceiver; and take a received signal strength indication (RSSI) value of the idle carrier frequency to be measured reported by a base station transceiver as signal strength of the background noise of the base station antenna interface; and

the base station transceiver, which is configured to: measure the RSSI value of the idle carrier frequency to be measured according to the configuration parameter of the idle carrier frequency to be measured synchronized by the OMC, and report the RSSI value to the OMC.

According to the method, apparatus and system for measuring the background noise of the base station antenna interface provided by the embodiments of the present invention, when it is confirmed that the number of the configured carriers of the base station transceiver is smaller than the maximum number of the configurable carriers, the idle carrier frequency that is the configurable for use but is not configured for use is determined; the idle carrier frequency to be measured that is used for measuring the background noise of the base station antenna interface is selected, and the RSSI value of the idle carrier frequency to be measured is taken as the signal strength of the background noise of the base station antenna interface. Thus, the real-time measurement of the background noise of the antenna interface is implemented based on the idle carrier, which offers guarantee for the real-time measuring and maintaining the radio environment of the base station and the high-performance normal operation of the base station system.

Other features and advantages of the present invention will be described in the following part of the specification, and becomes obvious from the specification in part, or are understood by implementing the present invention. The object and other advantages of the present invention may be implemented and obtained by the structure particularly indicated in the specification, claims and drawings.

Brief Description of Drawings

FIG. 1 is a schematic diagram of measurement principle of the base station transceiver in the related art;

FIG. 2 is a flowchart of the method for measuring the background noise of the base station antenna interface according to embodiments of the present invention;

FIG. 3 is a flowchart of a preferred method for measuring the background noise of the base station antenna interface according to embodiments of the present invention;

FIG. 4 is a block diagram of the structure of the apparatus for measuring the background noise of the base station antenna interface according to embodiments of the present invention;

FIG. 5 is a schematic diagram of a probable structure of a determining unit in the apparatus for measuring the background noise of the base station antenna interface according to embodiments of the present invention;

FIG. 6 is a block diagram of the system for measuring the background noise of the base station antenna interface according to embodiments of the present invention.

Preferred Embodiments of the Present Invention

In order to implement the real-time measurement of the background noise of the base station antenna interface, and achieve the goal of real-time measuring and maintaining the radio environment of the base station and the high-performance normal operation of the base station system, the embodiments of the present invention provides a method, an apparatus and a system for measuring background noise of the base station antenna interface.

The preferred embodiment of the present invention will be described in combination with the drawings of the specification as follows, and it should be understood that the preferred embodiments described herein are used only for illustrating and explaining the present invention, but is not used for limiting the present invention, Embodiments in the present invention and features in the embodiments may combines to each other in cases without conflicts.

The inventor discovers that: a feature of the base station system is the multi-carrier design and software flexibly configuring application; in practical applications of the base station however, most operators didn't sufficiently use the fully-configured multi-carrier capability of the base station system. For example, for the presently common Code Division Multiple Access (CDMA) base station, the bandwidth of the base station duplexer is generally 11M, the full configuration of the base station transceiver is 6 carriers; however, in the practical application of the CDMA base station, two-carrier and 4-carrier are most commonly used by the operator, while the 6-carrier is rarely used. For the 6-carrier CDMA base station, the radio environment of the base station antenna interface has the following features: in the cell radio environment covered by the base station antenna, the base station antenna may receive and process the signal with a bandwidth of 6-carrier, however, the number of carriers configured in practical application is smaller than the number of fully-configured carriers, that is, a part of the idle carriers in the base station antenna interface receive useless signals. According to the radio management regulations, in the coverage region of the base station antenna as the 11M CDMA application frequency band occupied by the base station duplexer, other radio signals are not permitted to be sent. Therefore, it is can be known from the radio management regulations that: there is only background noise (spatial thermal noise) in the idle carrier that is un-configured for use in the 11M CDMA application frequency band occupied by the base station duplexer. The background noise (spatial thermal noise) is evenly distributed in the 11M CDMA application frequency band and enters into the base station transceiver by the base station antenna interface.

Base on the above analysis, the embodiments of the present invention provides a method for measuring the background noise of the base station antenna interface, as shown in FIG. 2, and the method comprises following steps.

In step S201, when it is confirmed that the number of the configured carriers is smaller than the maximum number of configurable carriers according to the carrier frequency configuration information of a base station transceiver, the idle carrier frequencies that are configurable for use but are not configured for use are determined.

In step S202, the idle carrier frequency to be measured that is used for measuring the background noise of the base station antenna interface is selected from the determined various idle carrier frequencies, and the configuration parameter of the idle carrier frequency to be measured is synchronized to the base station transceiver.

In step S203 , the RSSI value of the idle carrier frequency to be measured that is measured and reported by the base station transceiver according to the configuration parameter is taken as the signal strength of the background noise of the base station antenna interface.

In the specific implementation of S201, the method for determining the idle carrier frequencies that are configurable for use but are not configured for use comprises:

calculating the center frequency of each configured carrier according to the frequency number of each configured carrier in the carrier frequency configuration information;

calculating the frequency range of the idle carrier in the frequency band of the base station duplexer according to the calculated center frequency of the configured carrier and the frequency band information of the base station duplexer; and

determining the idle carrier frequency that is configurable for use but is not configured for use according to the frequency range of the idle carrier in the frequency band of the base station duplexer and a pre-planned carrier frequencies that are configurable for use.

In the specific implementation of S202, the step of selecting an idle carrier frequency to be measured that is used for measuring the background noise of the base station antenna interface from the determined various idle carrier frequencies comprises:

selecting the idle carrier frequency that has the maximum interval with the configured carrier from the determined various idle carrier frequency as an idle carrier frequency to be measured.

In the specific implementation of S203, the configuration parameter of the idle carrier frequency to be measured includes: a frequency number of the idle carrier frequency to be measured, and may also include the bandwidth of the baseband carrier filter corresponding to the idle carrier frequency to be measured.

In the specific embodiment, if it is confirmed that the number of configured carriers is equal to the maximum number of the configurable carriers according to the carrier frequency configuration information of the base station transceiver, then the number of the terminal users of the configured carriers is monitored; when it is monitored that a carrier does not have a terminal user, the RSSI value of this carrier is obtained, and the obtained RSSI value is taken as the signal strength of the background noise of the base station antenna interface.

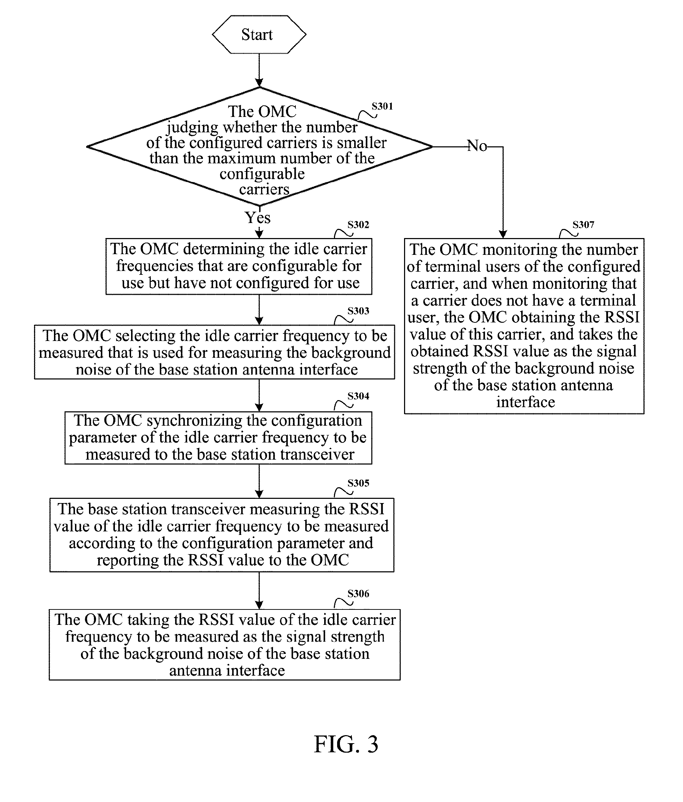

A preferred method for measuring the background noise of the base station antenna interface provided by the embodiments of the present invention is further described in detail as follows, and the specifically involved network entities comprise an OMC and a base station transceiver, as shown in FIG. 3, and the method comprises the following steps.

In step S301, the OMC judges whether the number of the configured carriers is smaller than the maximum configurable carrier number (as the maximum capacity) according to the preconfigured carrier frequency configuration information of the base station transceiver, and if it is, S302 is executed, or else, step S307 is executed.

In step S302, the OMC determines the idle carrier frequency that is configurable for use but is not configured for use according to the carrier frequency configuration information of the base station transceiver and the frequency band information of the base station duplexer.

In step S303, the OMC selects the idle carrier frequency to be measured used for measuring the background noise of the base station antenna interface from the idle carrier frequencies that are configurable for use but are no configured for use.

In step S304, the OMC synchronizes the configuration parameter of the idle carrier frequency to be measured to the base station transceiver, that is, the circuit parameter of the background noise measurement is configured according to the configuration parameter of the idle carrier frequency to be measured.

In the specific implementation, the frequency number of the idle carrier frequency to be measured and the bandwidth of the baseband carrier filter corresponding to the idle carrier frequency to be measured may be flexibly configured according to the practical requirement, and are synchronized to the base station transceiver, thereby implementing to use the RSSI measuring module to measure the RSSI value that is centered at the carrier frequency with a bandwidth of the baseband carrier filter.

In step S305, the base station transceiver measures the RSSI value of the idle carrier frequency to be measured according to the configuration parameter and reports the RSSI value to the OMC.

In step S306, the OMC takes the RSSI value of the idle carrier frequency to be measured reported by the base station transceiver as the signal strength of the background noise of the base station antenna interface;

In step S307, the OMC monitors the number of terminal users of the configured carriers, and when it is monitored that one carrier does not have a terminal user, the OMC obtains the RSSI value of this carrier, and takes the obtained RSSI value as the signal strength of the background noise of the base station antenna interface.

The method for measuring the background noise of the base station antenna interface provided by the embodiment of the present invention applies to various network systems. For facilitating description, a CDMA system is described as an example in the embodiment of the present invention, and the base station in the CDMA system may be called as a CDMA base station. Assuming that the full-configuration of the base station transceiver of the CDMA base station is 6-carrier, the frequency band of the base station duplexer is 824MHz-835MHz, the number of the configured carriers is 4, and the frequency numbers of the configured carriers are 37, 78, 119, and 160 respectively. The method for measuring the CDMA background noise of the base station antenna interface comprises the following steps.

In step 1, the OMC judges whether the number of the configured carriers is smaller than the maximum number of the configurable carriers (as the maximum capacity) according to the preconfigured carrier frequency configuration information of the base station transceiver, and since the number of the configured carriers is 4 while the maximum number of the configurable carriers is 6, then step 2 is executed.

In step 2, the idle carrier frequencies that are configurable for use but are not configured for use are determined.

The specific implementation of step 2 comprises the following sub-steps.

In step 21, the center frequency of each configured carrier is determined according to the frequency numbers of configured carrier 37, 78, 119, and 160 based on the frequency calculating formula of the CDMA system.

The frequency calculating formula is specifically as shown in formula [1]:

$$F(N) = 825 + 0.03N; \quad 825.03 \leq F(N) \leq 848.31; \quad N \in (1,777)$$
$$F(N) = 825 + 0.03(N - 1023); \quad 824.7 \leq F(N) \leq 825; \quad N \in (1013,1023) \qquad [1]$$

The center frequencies of each configured carrier are 826.11MHz, 827.34MHz, 828.57MHz, and 829.80MHz respectively.

In step 22, the frequency range of the idle carrier in the frequency band 824MHz-835MHz of the base station duplexer is calculated according to the calculated center frequencies (826.11MHz, 827.34MHz, 828.57MHz, and 829.80MHz) of the configured carriers and the frequency band information ( 824MHz-835MHz ) of the base station duplexer.

Since the bandwidth of each carrier is 1.23MHz, so the frequency range of the idle carriers may be obtained as shown in formula [2]:

$$(829.8 + 1.23) \leq F(n1) = (825 + 0.03n1) \leq (835 - 1.23), \quad n1 \in (1,777) \qquad [2]$$

In step 23, the idle carrier frequencies that are configurable for use but are not configured for use are determined according to the frequency range of the idle carriers in the frequency band 824MHz-835MHz of the base station duplexer and the pre-planned carrier frequency that is configurable for use.

In step 3, the idle carrier frequency that has the maximum interval with the configured carrier is selected from the determined various idle carrier frequencies as an idle carrier frequency to be measured.

The interval between the minimum center frequency in the configured carrier and the lower boundary of the frequency band of the base station duplexer is (826.11M-824M)=2.11MHz; the interval between the maximum center frequency in the configured carrier and the lower boundary of the frequency band of the base station duplexer is (835M-829.80M)=5.20MHz, that is to say, the idle carrier frequency that has the maximum interval with the configured carrier is at the high end in the frequency band of the base station duplexer, and the idle carrier frequency n1 to be measured is selected as 292.

In step 4, the configuration parameter n1 and B(n1) are synchronized to the base station transceiver.

The idle carrier frequency n1 to be measured is 292, and the bandwidth of the base band carrier filter corresponding to the idle carrier frequency n1 to be measured is B(n1) = 1M;

Specifically, the carrier frequency n1 used for measuring the background noise signal strength and the bandwidth parameter B(n1) configuration parameter of the corresponding base band carrier filter are synchronized to the base station transceiver, that is, the circuit parameter for the background noise signal strength measurement is set according to an OMC application configuration parameter.

In step 5, the base station transceiver measures the RSSI value of the idle carrier frequency n1 to be measured

In step 6, the base station transceiver reports the measured RSSI value of the idle carrier frequency n1 to be measured.

In step 7, the OMC takes the RSSI value of the idle carrier frequency n1 to be measured as the signal strength of the background noise of the base station antenna interface.

Base on the same invention concept, the embodiments of the present invention also provides an apparatus for measuring the background noise of the base station antenna interface. Because the principle for the measuring apparatus solving the problem is similar to the method for measuring the background noise of the base station antenna interface, so the implementation of the method may be considered as a reference for the implementation of this apparatus, and repeat will not be made herein.

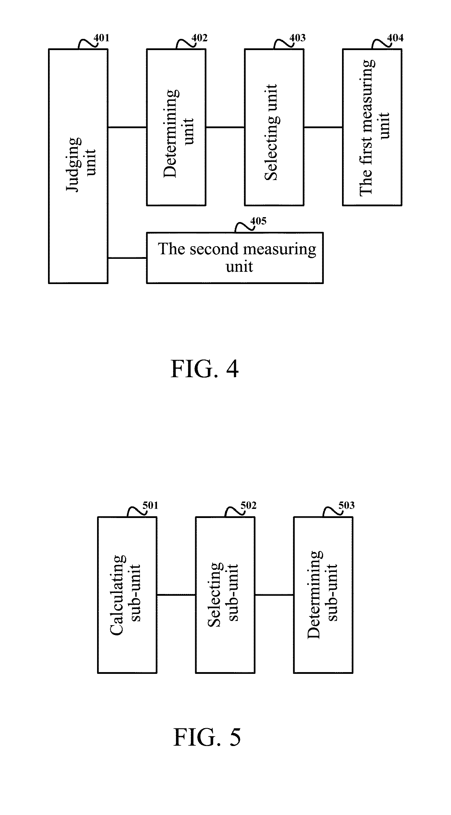

As shown in FIG. 4, the apparatus for measuring the background noise of the base station antenna interface comprises:

a judging unit 401, which is configured to: trigger a determining unit 402 when it is confirmed that the number of configured carriers is smaller than the maximum number of the configurable carriers according to the carrier frequency configuration information of the base station transceiver;

the determining unit 402, which is configured to: determine the idle carrier frequencies that are configurable for use but are not configured for use;

a selecting unit 403, which is configured to: select the idle carrier frequency to be measured used for measuring the background noise of the base station antenna interface from various idle carrier frequency determined by the determining unit 402; and

the first measuring unit 404, which is configured to: synchronize the configuration parameter of the idle carrier frequency to be measured to the base station transceiver, and take the received signal strength indication (RSSI) value of the idle carrier frequency to be measured that is measured and reported by the base station transceiver according to the configuration parameter as the signal strength of the background noise of the base station antenna interface.

In the specific implementation, the selecting unit 403 selects the idle carrier frequency with the maximum interval with the configured carrier as the idle carrier frequency to be measured from the determined various idle carrier frequencies.

As shown in FIG. 5, the determining unit 402 may comprises:

a calculating sub-unit 501, which is configured to: calculate the center frequency of each configured carrier according the frequency number of each configured carrier in the carrier frequency configuration information;

a selecting sub-unit 502, which is configured to: calculate the frequency range of the idle carrier in the frequency band of the base station duplexer according to the calculated center frequency of the configured carrier and the frequency band information of the base station duplexer; and

a determining sub-unit 503, which is configured to: determine the idle carrier frequencies that are configurable for use but are not configured for use according to the frequency range of the idle carrier in the frequency band in the base station duplexer and the pre-planned carrier frequency that is configurable for use.

Preferably, this measuring apparatus may also comprise the second measuring unit 405.

The judging unit 401 may also be configured to: trigger the second measuring unit 405 when it is confirmed that the number of the configured carriers is equal to the maximum number of the configurable carriers according to the preconfigured carrier frequency configuration information.

The second measuring unit 405 is configured to: monitor the number of the terminal users of the configured carriers, and when monitoring that one carrier does not have a terminal user, obtain the received signal strength indication (RSSI) value of this carrier, and take the obtained RSSI value as the signal strength of the background noise of the base station antenna interface.

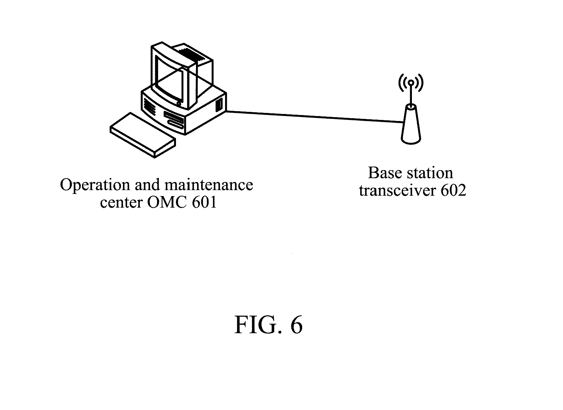

The embodiments of the present invention also provide a system for measuring the background noise of the base station antenna interface, and as shown in FIG. 6, the system comprises an operation and maintenance center (OMC) 601 and a base station transceiver 602,

The operation and maintenance center (OMC) 601 is configured to: when confirming that the number of the configured carriers is smaller than the maximum number of the configurable carriers according to the carrier frequency configuration information of the base station transceiver 602, determine the idle carrier frequencies that are configurable for use but are not configured for use; select the idle carrier frequency to be measured used for measuring the background noise of the base station antenna interface from various determined idle carrier frequencies, and synchronize the configuration parameter of the idle carrier frequency to be measured to the base station transceiver 602; and take the received signal strength indication (RSSI) value of the idle carrier frequency to be measured that is reported by the base station transceiver 602 as the signal strength of the background noise of the base station antenna interface.

The base station transceiver 602 is configured to: measure the RSSI value of the idle carrier frequency to be measured according to the configuration parameter of the idle carrier frequency to be measure that is synchronized by the operation and maintenance center OMC 601, and report the RSSI value to the operation maintenance center OMC 601.

Preferably, the operation maintenance center OMC 601 is also configured to: when confirm that the number of the configured carriers is equal to the maximum number of the configurable carriers according to the carrier frequency configuration information of the base station transceiver 602, monitor the number of the users of the configured carrier; and when monitoring that one carrier does not have a terminal user, obtain the RSSI value of this carrier, and take the obtained RSSI value as the signal strength of the background noise of the base station antenna interface.

According to the method, apparatus and system for measuring the background noise of the base station antenna interface provided by the embodiments of the present invention, when it is confirmed that the number of the configured carriers of the base station transceiver is smaller than the maximum number of the configurable carriers, the idle carrier frequency that is the configurable for use but is not configured for use is determined; the idle carrier frequency to be measured that is used for measuring the background noise of the base station antenna interface is selected, and the RSSI value of the idle carrier frequency to be measured is taken as the signal strength of the background noise of the base station antenna interface. Thus, the real-time measurement of the background noise of the antenna interface is implemented based on the idle carrier, which offers guarantee for the real-time measuring and maintaining the radio environment of the base station and the high-performance normal operation of the base station system.

Obviously, those skilled in the art may make various changes and variations without departing from the spirit and scope of the present invention. Thus, if these changes and variations of the present invention fall into the scope of the claims of the present invention and the equivalent technology, the present invention intends to comprise these changes and variations.

Industrial Applicability

Compared with the related art, the present invention implements the real-time measurement of the antenna interface background noise based on the idle carrier, which offers guarantee for the real-time measuring and maintaining the radio environment of the base station and the high-performance normal operation of the base station system.

**Claims**

1.  A method for measuring background noise of a base station antenna interface, comprising:

    when confirming that a number of configured carriers is smaller than a maximum number of configurable carriers according to carrier frequency configuration information of a base station transceiver, determining idle carrier frequencies that are configurable for use but are not configured for use;
    selecting an idle carrier frequency to be measured used for measuring the background noise of the base station antenna interface from various determined idle carrier frequencies, and synchronizing a configuration parameter of the idle carrier frequency to be measured to the base station transceiver; and
    taking a received signal strength indication (RSSI) value of the idle carrier frequency to be measured that is measured and reported by the base station transceiver according to the configuration parameter as signal strength of the background noise of the base station antenna interface.

2.  The method according to claim 1, wherein the step of selecting the idle carrier frequency to be measured used for measuring the background noise of the base station antenna interface from various determined idle carrier frequencies comprises:

    selecting an idle carrier frequency with a maximum interval with the configured carriers from the various determined idle carrier frequencies as the idle carrier frequency to be measured.

3.  The method according to claim 1, wherein the step of determining idle carrier frequencies that are configurable for use but are not configured for use comprises:

calculating a center frequency of each configured carrier according to a frequency number of each configured carrier in the carrier frequency configuration information;

calculating a frequency range of the idle carriers in a frequency band of a base station duplexer according to the calculated center frequency of the configured carrier and frequency band information of the base station duplexer; and

determining the idle carrier frequencies that are configurable for use but are not configured for use according to the frequency range of the idle carriers in the frequency band of the base station duplexer and pre-planned carrier frequencies that are configurable for use.

4.  The method according to claim 1, 2 or 3, further comprising:

when confirming the number of configured carriers is equal to the maximum number of the configurable carriers according to the carrier frequency configuration information of the base station transceiver, monitoring a number of terminal users of the configured carriers; and

when monitoring that one carrier does not have a terminal user, obtaining a RSSI value of this carrier, and taking the obtained RSSI value as the signal strength of the base station background noise.

5.  The method according to claim 1, wherein the configuration parameter of the idle carrier frequency to be measured includes: a frequency number of the idle carrier frequency to be measured and a bandwidth of a baseband carrier filter corresponding to the idle carrier frequency to be measured.

6.  An apparatus for measuring background noise of a base station antenna interface, comprising:

a judging unit, which is configured to: trigger a determining unit when confirming that a number of configured carriers is greater than a maximum number of the configurable carriers according to carrier frequency configuration information of a base station transceiver;

the determining unit, which is configured to: determining idle carrier frequencies that are configurable for use but are not configured for use;

a selecting unit, which is configured to: select an idle carrier frequency to be measured used for measuring the background noise of the base station antenna interface from various idle carrier frequencies determined by the determining unit; and

a first measuring unit, which is configured to: synchronize a configuration parameter of the idle carrier frequency to be measured to the base station transceiver, and take a received signal strength indication (RSSI) value of the idle carrier frequency to be measured that is measured and reported by the base station transceiver according to the configuration parameter as signal strength of the background noise of the base station antenna interface.

7.  The apparatus according to claim 6, wherein,
the selecting unit is configured to: select an idle carrier frequency that has a maximum interval with the configured carriers from various idle carrier frequencies determined by the determining unit as the idle carrier frequency to be measured.

8.  The apparatus according to claim 6, wherein the determining unit comprises:

a calculating sub-unit, which is configured to: calculate a center frequency of each configured carrier according to a frequency number of each configured carrier in the carrier frequency configuration information;

a selecting sub-unit, which is configured to: calculate a frequency range of idle carriers in a frequency band of a base station duplexer according to the calculated center frequency of the configured carrier and frequency band information of the base station duplexer; and

a determining sub-unit, which is configured to: determine the idle carrier frequencies that are configurable for use but are not configured for use according to the frequency range of the idle carriers in the frequency band of the base station duplexer and a pre-planned carrier frequency that is configurable for use.

9.  The apparatus according to claim 6, 7 or 8, further comprising a second measuring unit, wherein:

the judging unit is further configured to: trigger the second measuring unit when confirming that the number of the configured carriers is equal to the maximum number of the configurable carriers according to pre-configured carrier frequency configuration information;

the second measuring unit is configured to: monitor a number of terminal users of configured carriers when being triggered by the judging unit, and when monitoring that one carrier does not have a terminal user, obtain a RSSI value of this carrier, and take the obtained RSSI value as the signal strength of the background noise of the base station antenna interface.

10. A system for measuring the background noise of a base station antenna interface, comprising:

an operation and maintenance center (OMC), which is configured to: determine idle carrier frequencies that are configurable for use but are not configured for use when confirming that a number of configured carriers is smaller than a maximum number of configurable carriers according to carrier frequency configuration information of a base station transceiver; select an idle carrier frequency to be measured used for measuring the background noise of the base station antenna interface from the various determined idle carrier frequencies, and synchronize a configuration parameter of the idle carrier frequency to be measured to the base station transceiver; and take a received signal strength indication (RSSI) value of the idle carrier frequency to be measured reported by a base station transceiver as signal strength of the background noise of the base station antenna interface; and the base station transceiver, which is configured to: measure the RSSI value of the idle carrier frequency to be measured according to the configuration parameter of the idle carrier frequency to be measured synchronized by the OMC, and report the RSSI value to the OMC.

11. The system according to claim 10, wherein,
the OMC is further configured to: monitor a number of terminal users of the configured carriers when confirming that the number of configured carriers is equal to the maximum number of configurable carriers according to the carrier frequency configuration information of the base station transceiver; when monitoring that one carrier does not have a terminal user, obtain a RSSI value of this carrier, and take the obtained RSSI value as the signal strength of the background noise of the base station antenna interface.

FIG. 1

| | |
|---|---|
| When it is confirmed that the number of the configured carriers is smaller than the maximum number of configurable carriers according to the carrier frequency configuration information of a base station transceiver, determining the idle carrier frequency that is configurable for use but has not configured for use | S201 |
| Selecting the idle carrier frequency to be measured that is used for measuring the background noise of the base station antenna interface from the determined various idle carrier frequencies, and the synchronizing the configuration parameter of the idle carrier frequency to be measured to the base station transceiver | S202 |
| Taking the RSSI value of the idle carrier frequency to be measured that is measured and reported by the base station transceiver according to the configuration parameter as the signal strength of the background noise of the base station antenna interface | S203 |

FIG. 2

Start

The OMC judging whether the number of the configured carriers is smaller than the maximum number of the configurable carriers — S301

No

Yes

The OMC determining the idle carrier frequencies that are configurable for use but have not configured for use — S302

The OMC monitoring the number of terminal users of the configured carrier, and when monitoring that a carrier does not have a terminal user, the OMC obtaining the RSSI value of this carrier, and takes the obtained RSSI value as the signal strength of the background noise of the base station antenna interface — S307

The OMC selecting the idle carrier frequency to be measured that is used for measuring the background noise of the base station antenna interface — S303

The OMC synchronizing the configuration parameter of the idle carrier frequency to be measured to the base station transceiver — S304

The base station transceiver measuring the RSSI value of the idle carrier frequency to be measured according to the configuration parameter and reporting the RSSI value to the OMC — S305

The OMC taking the RSSI value of the idle carrier frequency to be measured as the signal strength of the background noise of the base station antenna interface — S306

FIG. 3

Judging unit 401

Determining unit 402

Selecting unit 403

The first measuring unit 404

The second measuring unit 405

FIG. 4

Calculating sub-unit 501

Selecting sub-unit 502

Determining sub-unit 503

FIG. 5

Operation and maintenance
center OMC 601

Base station
transceiver 602

FIG. 6

# INTERNATIONAL SEARCH REPORT

| International application No. |
|---|
| PCT/CN2010/079193 |

**A. CLASSIFICATION OF SUBJECT MATTER**

H04W 52/00(2009.01)i

According to International Patent Classification (IPC) or to both national classification and IPC

**B. FIELDS SEARCHED**

Minimum documentation searched (classification system followed by classification symbols)

IPC:H04L,H04Q,H04W,H04M

Documentation searched other than minimum documentation to the extent that such documents are included in the fields searched

Electronic data base consulted during the international search (name of data base and, where practicable, search terms used)

WPI, EPODOC, CNPAT, CNKI, IEEE, 3GPP: measur+, nois+, antenna?, carr+, signal w strength, base w station

**C. DOCUMENTS CONSIDERED TO BE RELEVANT**

| Category* | Citation of document, with indication, where appropriate, of the relevant passages | Relevant to claim No. |
|---|---|---|
| PX | CN101867961A (ZTE CORPORATION) 20 Oct. 2010(20.10.2010) claims 1-11 | 1-11 |
| A | WO2006/026715A1 (QUALCOMM INCORPORATED) 09 Mar. 2006(09.03.2006) description pages 10-11, Fig. 3 | 1-11 |
| A | CN101515810A (HUAWEI TECHNOLOGIES CO., LTD.) 26 Aug. 2009(26.08.2009) the whole document | 1-11 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 01 Mar. 2011(01.03.2011) | **31 Mar. 2011 (31.03.2011)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br>CHEN,Yao<br>Telephone No. (86-10)62413419 |
|---|---|

Form PCT/ISA /210 (second sheet) (July 2009)

## INTERNATIONAL SEARCH REPORT
### Information on patent family members

| | International application No. |
|---|---|
| | PCT/CN2010/079193 |

| Patent Documents referred in the Report | Publication Date | Patent Family | Publication Date |
|---|---|---|---|
| CN 101867961 A | 20.10.2010 | NONE | |
| WO 2006/026715 A1 | 09.03.2006 | US 2006045045 A1 | 02.03.2006 |
| | | INMUMNP 200700438 E | 12.10.2007 |
| | | CN 101044694 A | 26.09.2007 |
| | | MXPA 07002484 A | 01.06.2007 |
| | | IN 235146 B | 10.07.2009 |
| | | MX 272411 B | 04.12.2009 |
| CN 101515810 A | 26.08.2009 | NONE | |

Form PCT/ISA /210 (patent family annex) (July 2009)